# EUROPEAN PATENT APPLICATION

(11) **EP 1 630 894 A1**
(43) Date of publication of application: **01.03.2006**
(21) Application number: 04020458.8
(22) Date of filing: 27.08.2004
(51) Int. Cl.: H01M 10/40

(54) **Lithium secondary battery**

(71) Applicant: Sanyo Component Europe GmbH, 81829 München (DE)
(72) Inventor: Winter, Martin, Dr., 8072 Fernitz (AT); Lanzer, Eva A., 8010 Graz (AT); Möller, Kai-C., Dr., 8010 Graz (AT); Besenhard, Jürgen O., Dr, 8010 Graz (AT); Wagner, Markus Robert, Dr., 1030 Wien (AT); Fujitani, Shin, Dr Sanyo Electric Co., Ltd., Nishi-ku Kobe-city Hyogo, 651-2242 (JP); Weydanz, Wolfgang J., Sanyo Component Europa GmbH, 81829 Munich (DE)
(74) Representative: Kilian, Helmut

(57) **Abstract**

A lithium secondary battery with an electrochemical cell comprising a positive electrode, a negative electrode and a nonaqueous electrolyte wherein said positive or negative electrode is an electrode having a thin surface film composed of active material capable of lithium storage and release on a current collector, wherein the nonaqueous electrolyte contains at least ethyl-2,2,2,-trifluoroethyl carbonate.

## Description

The invention relates to a lithium secondary battery with an electrochemical cell comprising a positive electrode, a negative electrode and a nonaqueous electrolyte wherein said positive or negative electrode is an electrode having a thin surface film composed of active material capable of lithium storage and release on a current collector.

From US 2002/0192564 A1 a lithium secondary battery of this type is known in which the electrolyte is one containing phospate ester, phosphite ester and/or borate ester. By adding any of these esters to the electrolyte the charge-discharge cycle characteristics of such a cell is improved.

It is an object of the invention to provide a lithium secondary battery of the above type having a different component as part of the electrolyte further improving the charge-discharge characteristics of such a cell.

This object is achieved by a lithium secondary battery of the above indicated type, wherein the nonaqueous electrolyte contains at least ethyl-2,2,2,-trifluoroethyl carbonate.

The structure of ethyl-2,2,2,-trifluoroethyl carbonate is depicted below.

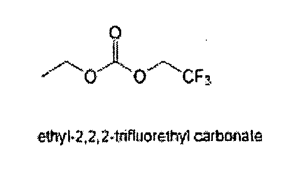

In a preferred embodiment, the thin film is divided into columns by gaps formed therein in a manner to extend in its thickness direction.

It can be considered that by the film formed with the ethyl-2,2,2,-trifluoroethyl carbonate, the surface structure of the thin film of active material is stabilized. The deterioration or collapse of the active material surface in general, in specific, of the columnar portions of the preferred embodiment, is suppressed. It can also be considered that by suppressing the deterioration of the surface structure or the collapse of the columnar portions of the preferred embodiment, the charge-discharge cycle characteristics can be improved.

Due to the ethyl-2,2,2,-trifluoroethyl carbonate, solid electrolyte interphase (SEI) films containing fluorine are formed on the surface of the active material. Thus, especially ethyl-2,2,2,-trifluoroethyl carbonate stabilizes the solid electrolyte interphase (SEI) film by supplying fluorine atoms to it. This film is supposedly more flexible than that formed in a standard nonaqueous electrolyte. The flexibility thus created can better accommodate for volume changes in the active material when charging and discharging the respective electrode.

According to preferred embodiments ethyl-2,2,2-trifluoroethyl is contained in the non-aqueous electrolyte in an amount
- of not more than 25 % weight,
- of at least 1 % by weight,
- of 1-10 % by weight,
- of more than 10 % by weight to 25 % by weight,
- of 2.5-3.5 % by weight,
- of more than 3.5 % by weight to 7 % by weight,
- of more than 7 % by weight to 10 % by weight,
- of more than 10 % by weight to 18 % by weight,
- of more than 18 % by weight to 25 % by weight.

The thin film of active material, preferably with columnar structure, is preferably formed by a method of depositing a thin film from a gas phase or a liquid phase. Examples of the method of depositing a thin film from a gas phase include CVD, sputtering, vapor evaporation, and spraying. Among these methods, CVD, sputtering and vapor evaporation are preferably employed. Examples of the method of depositing a thin film from a liquid phase include plating methods such as electroplating and electroless plating.

A thin film formed by the above-mentioned method is in general a continuous thin film. When this thin film stores lithium, the volume thereof expands. When stored lithium is released, the volume shrinks. By such expansion and shrinkage of the volume, gaps are formed in the thin film of active material.

As described in US 2002/0192564 A1 the gaps are formed in a manner to expand in the thickness direction of the thin film and the thin film is divided into columns. Even if the volume of the thin film expands or shrinks by charge and discharge, the expansion and shrinkage of the volume can be accommodated by the gaps around the columnar portions, formed by the division of the thin film into the columns. As a result, the generation of stress in the thin film can be prevented. For this reason, it is possible to prevent the thin film from being pulverized or being separated from the current collector. Thus, the adhesion between the current collector and the thin film is kept so that charge-discharge cycle characteristics can be improved.

Since coating films are formed on the whole surface, not only on a part thereof as according to US 2002/0192564 A1, of the active material or the columns respectively in the present invention, the structure of the active material is further stabilized so that the charge-discharge cycle characteristics can be further improved.

The active material in the present invention is capable of lithium storage and release, and is preferably composed of an active material, which stores lithium by being alloyed with lithium. Examples of such an active material include silicon, germanium, tin, lead, zinc, magnesium, sodium, aluminium, potassium, and indium. Among these elements, silicon and germanium are used preferably because of high theoretical capacity thereof. Therefore, the active material or thin film of active material used in the present invention is preferably made mainly of silicon, germanium or tin, and is particularly preferably made mainly of silicon. An amorphous or microcrystalline silicon active material or thin film is particularly preferable.

As described above, in the present invention, the nonaqueous electrolyte includes ethyl-2,2,2,-trifluoroethyl carbonate. The nonaqueous electrolyte in the present invention includes such an additive, and is composed of a solvent and a solute. The type of the solvent is not particularly limited so long as the solvent is generally used in lithium secondary batteries. Examples thereof include cyclic carbonates such as ethylene carbonate, propylene carbonate, butylene carbonate; and chain carbonates such as dimethyl carbonate, diethyl carbonate and methyl ethyl carbonate. Preferably, a mixed solvent of a cyclic carbonate and a chain carbonate is used. It is allowable to use a mixed solvent of the above-mentioned cyclic carbonate, and an ether solvent such as 1,2-dimethoxyethane and 1,2-diethoxyethane, or a chain ester such as gamma-butyrolactone, sulfolane or methyl acetate.

The type of the solute of the nonaqueous electrolyte is not particularly limited so long as the solute is generally used in lithium secondary batteries. Examples thereof include LiPF₆, LiBF₄, LiCF₃SO₃, LiN (CF₃SO₂)₂, LiN (C₂F₅SO₂)₂, LiN (CF₃SO₂) (C₄F₉SO₂), LiC(CF₃SO₂)₃, LiC (C₂F₅SO₂)₃, LiAsF₆, LiClO₄, Li₂B₁₀Cl₁₀, and Li₂B₁₂Cl₁₂. A mixed solute of LiXF_{y} [wherein X represents P, As, Sb, B, Bi, Al, Ga or In, when X represents P, As or Sb, y is 6, and when X represents B, Bi, Al, Ga or In, y is 4], and lithium perfluoroalkylsulfonic imide LiN(CFₘF₂ₘ₊₁SO₂) (CₙF₂ₙ₊₁SO₂) [wherein m and n each independently represent an integer of 1 to 4] or lithium perfluoroalkylsulfonic methide LiC(CₚF₂ₚ₊₁SO₂)(C_{q}F_{2q+1}SO₂)(CᵣF₂ᵣ₊₁SO₂) [wherein p, q and r each independently represent an integer of 1 to 4] is particularly preferable. Among these solutes, a mixed solute of LiPF₆ and LiN(C₂F₅SO₂)₂ is particularly preferable.

As the nonaqueous electrolyte, there may be used a gel polymer electrolyte wherein a polymer electrolyte such as polyethylene oxide, polyacrylonitrile or polyfluorovinylidene is impregnated with electrolyte solution, or an inorganic solid electrolyte such as LiI or Li₃N.

The electrolyte of the lithium secondary battery of the present invention can be used without limitation so far as a Li compound as a solute for exhibiting ion conductivity and a solvent for dissolving and holding the solute are not decomposed by voltage at the time when the battery is charged, discharged, or stored.

In the present invention, when the active material or thin film of active material capable of lithium storage and release is made of a material having a negative potential, such as a silicon thin film, such an electrode is generally used as a negative electrode. Examples of a positive active material in this case include lithium-containing transition metal oxides such as LiCoO₂, LiNiO₂, LiMn₂O₄, LiMnO₂, LiCo_{0.5}Ni_{0.5}O₂, and LiNi_{0.7}Co_{0.2}Mn_{0.1}O₂; and lithium-free metal oxides such as MnO₂. Other substances can also be used, without limitation, if they are capable of electrochemical insertion and release of lithium.

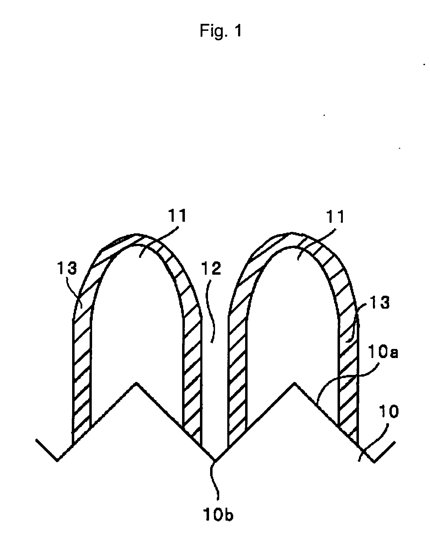

Fig. 1 is a schematic sectional view illustrating a surface state of an electrode in the present invention. As illustrated in Fig. 1, a thin film of active material 11 is formed on a surface 10a of a current collector 10. Irregularities are defined on the surface 10a of the current collector 10. By a gap 12 formed over a valley 10b of the irregularities, the thin film of active material 11 is divided into columns. Accordingly, spaces are defined around the columnar portions of the thin film of active material 11, so that expansion and shrinkage of the thin film of active material 11 with charge and discharge can be accommodated by the spaces. Coating films 13 are formed on the side faces of the columnar portions of the thin film of active material 11. The coating films 13 are, at least partially, formed from ethyl-2,2,2,-trifluoroethyl carbonate contained in the nonaqueous electrolyte. The coating films accordingly contain fluorine.

By forming such coating films 13 on the side faces of the columnar portions 11, the columnar structure is stabilized, so that deterioration or collapse of the columnar portions 11 is suppressed and the adhesion between the bottom of the columnar portion 11 and the current collector 10 can be kept good. Therefore, the charge-discharge cycle characteristics of the battery can be improved.

The present invention will be described in more detail by way of example. However, the present invention is not limited to the following examples, and the examples may be appropriately changed or modified without departing from the scope of the present invention.

### Manufacture of Working Electrode

The working electrode was formed as a thin film on a current collector. Special reference is made to the patent application US 2002/0192564 A1, and prior patent application JP 121171/2001 for more details about the making of the thin film electrode used here. A brief description is enclosed here for clarity.

As a current collector, an electrolytic copper foil (thickness: 18µm, and surface roughness Ra: 0.188µm) was used. A silicon thin film was formed on the electrolytic copper foil by RF sputtering, using a radio frequency of 13.56 MHz. Conditions for the sputtering are as follows: sputtering gas (Ar) flow rate: 100 sccm ("standard cubic centimetre per minute", equivalent to 4.5 x 10⁻⁵ mol/min), substrate temperature: room temperature (not heated), reaction pressure: 0.133 Pa (1.0 x 10⁻³ Torr), and radio frequency power: 200W. The silicon thin film was deposited to have a thickness of about 5µm. The resultant silicon thin film was subjected to Raman spectroscopic analysis. As a result, a peak around 480 cm⁻¹ was detected, while a peak around 520 cm⁻¹ was not detected. It is accordingly found that the resultant silicon thin film was an amorphous silicon thin film.

The electrolytic copper foil 1b on which the amorphous silicon thin film was formed 1a was cut out into a size of 4mm x 4mm and then dried at 100°C in vacuum for 2 hours, to obtain a negative electrode.

### Counter Electrode and Reference Electrode

As counter electrode 3 and reference electrode 2 lithium metal electrodes were used.

### Preparation of Electrolyte

Electrolyte: Five parts by weight of ethyl-2,2,2,-trifluoroethyl carbonate were mixed with 100 parts by weight of the electrolyte prepared by dissolving 1 mol/litre (1.0 M) of LiClO₄ in a mixed solvent containing ethylene carbonate (EC) and diethyl carbonate (DEC) at a weight ratio of 1:1, to prepare an Electrolyte. Thus a concentration of approximately 4.76 % by weight of ethyl-2,2,2,-trifluoroethyl carbonate is present in the electrolyte.

As a Comparative Electrolyte A, 1 mol/litre (1.0 M) of LiClO₄ was dissolved in a mixed solvent containing ethylene carbonate (EC) and diethyl carbonate (DEC) at a weight ratio of 1:1.

Further electrolytes: One, three, five, ten, twenty and thirty parts by weight of ethyl-2,2,2,-trifluoroethyl carbonate were mixed with 100 parts by weight of the electrolyte prepared by dissolving 1 mol/litre (1.0 M) of LiPF₆ in a mixed solvent containing ethylene carbonate (EC) and diethyl carbonate (DEC) at a weight ratio of 3:7, to prepare an Electrolyte. Thus a concentration of approximately 1.0, 2.9, 4.8, 9.1, 16.7 and 23.1 % by weight of ethyl-2,2,2,-trifluoroethyl carbonate is present in the electrolyte.

As a Comparative Electrolyte B for the above described Further Electrodes, 1 mol/litre (1.0 M) of LiPF₆ was dissolved in a mixed solvent containing ethylene carbonate (EC) and diethyl carbonate (DEC) at a weight ratio of 3:7.

### Manufacture of a Battery

In a glove box with the atmosphere of argon gas, the above obtained negative (working) and counter electrodes were introduced into a vial. The size of the working electrode was 4mm x 4mm. Counter and reference electrodes were introduced into the vial independently. No separator was necessary in this electrolyte-flooded cell. The vial was then filled with about 3 ml of the respective electrolyte as specified above to manufacture a lithium secondary battery. The design capacity of the battery is 3.8 Ah/g of active material. The design capacity of the cell is about 0.64 mAh.

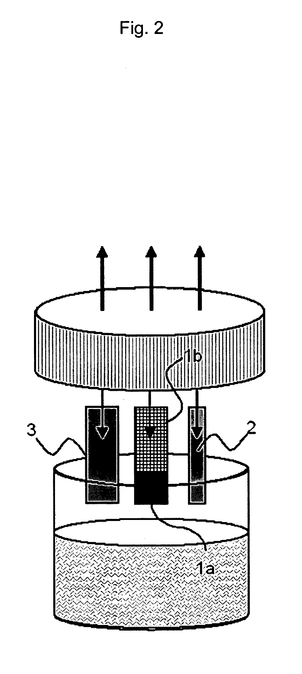

Fig. 2 is a sectional view illustrating the electrodes combined with each other inside the battery cell. As illustrated in Fig. 2, the working electrode 1, the counter electrode 3 and the reference electrode 2 are combined to be parallel and opposite to each other. The counter electrode 3 and reference electrode 2 are kept at a distance of about 4mm from the working electrode 1 respectively. In the working electrode 1, the active material layer 1a is provided on a current collector 1b made of copper. A negative tab for leading-out, which is made of copper, is also formed on the negative current collector 1b. The reference electrode 2 and counter electrode 3 are made of lithium metal. Connections for leading-out are made to the reference electrode 2 and counter electrode 3 directly by fixing them to the lead wires. The working electrode 1 and counter electrode 3 are connected by two contacts each. One of the contacts is for the power supply and the other for the sensing line respectively. The reference electrode 2 has only one contact, the sensing line.

### Measurement of Charge-Discharge Cycle Characteristics

Charge-discharge cycle characteristics for the battery of the Example with the Electrolyte and Comparative Electrolyte, respectively, were evaluated.

Charge was performed down to 0 mV at a constant current of 0.78 mA, and kept constant voltage at 0 mV for 1 hour. Discharge was performed up to 2.0 V at a constant current of 0.78 mA. This charge-discharge unit was recorded as one cycle. The measurement was made at about 20°C.

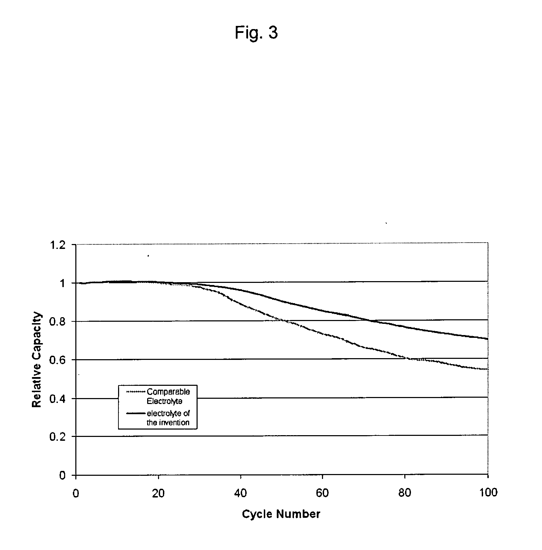

The capacity retention is shown in Fig. 3 for a cell with the Electrolyte from the current invention as well as the Comparative Electrolyte A described above, for reference.

As is evident from the results shown in Fig. 3, the addition of approximately 4.8 % by weight ethyl-2,2,2,-trifluoroethyl carbonate extended the cycle life, i.e. higher capacity retention rates than cells without the additive.

Experiments with Further Electrolytes and Comparative Electrolyte B yielded similar results. It was found that addition of approximately 1.0, 2.9, 4.8, 9.1, 16.7 and 23.1 % by weight of ethyl-2,2,2,-trifluoroethyl carbonate extended the cycle life.

## Claims

1. Lithium secondary battery with an electrochemical cell comprising a positive electrode, a negative electrode and a nonaqueous electrolyte wherein said positive or negative electrode is an electrode having a thin surface film composed of active material capable of lithium storage and release on a current collector, wherein the nonaqueous electrolyte contains at least ethyl-2,2,2,-trifluoroethyl carbonate.

2. Lithium secondary battery according to claim 1, wherein the nonaqueous electrolyte contains at least ethyl-2,2,2,-trifluoroethyl carbonate in an amount of not more than 25 % weight.

3. Lithium secondary battery according to claim 1 or 2, wherein the nonaqueous electrolyte contains at least ethyl-2,2,2,-trifluoroethyl carbonate in an amount of at least 1 % by weight.

4. Lithium secondary battery according to claim 1, wherein the nonaqueous electrolyte contains at least ethyl-2,2,2,-trifluoroethyl carbonate in an amount of 1-10 % by weight.

5. Lithium secondary battery according to claim 1, wherein the nonaqueous electrolyte contains at least ethyl-2,2,2,-trifluoroethyl carbonate in an amount of more than 10 % by weight to 25 % by weight.

6. Lithium secondary battery according to claim 1, wherein the nonaqueous electrolyte contains at least ethyl-2,2,2,-trifluoroethyl carbonate in an amount of 2.5-3.5 % by weight.

7. Lithium secondary battery according to claim 1, wherein the nonaqueous electrolyte contains at least ethyl-2,2,2,-trifluoroethyl carbonate in an amount of more than 3.5 % by weight to 7 % by weight.

8. Lithium secondary battery according to claim 1, wherein the nonaqueous electrolyte contains at least ethyl-2,2,2,-trifluoroethyl carbonate in an amount of more than 7 % by weight to 10 % by weight.

9. Lithium secondary battery according to claim 1, wherein the nonaqueous electrolyte contains at least ethyl-2,2,2,-trifluoroethyl carbonate in an amount of more than 10 % by weight to 18 % by weight.

10. Lithium secondary battery according to claim 1, wherein the nonaqueous electrolyte contains at least ethyl-2,2,2,-trifluoroethyl carbonate in an amount of more than 18 % by weight to 25 % by weight.

11. Lithium secondary battery according to any one of the preceding claims, wherein the thin film is divided into columns by gaps formed therein in a manner to extend in its thickness direction.
